# EUROPEAN PATENT APPLICATION

(11) **EP 2 924 925 A1**
(43) Date of publication of application: **30.09.2015**
(21) Application number: 13857535.2
(22) Date of filing: 21.11.2013
(51) Int. Cl.: H04L 12/70, H04L 12/717

(54) **COMMUNICATION SYSTEM, VIRTUAL-NETWORK MANAGEMENT DEVICE, COMMUNICATION NODE, AND COMMUNICATION METHOD AND PROGRAM**

(30) Priority: 22.11.2012 JP 2012255886
(71) Applicant: NEC Corporation, Tokyo 108-8001 (JP)
(72) Inventor: DEMPO, Hiroshi, Tokyo 108-8001 (JP)
(74) Representative: Vossius & Partner Patentanwälte Rechtsanwälte mbB
(86) International application number: PCT/JP2013/081432
(87) International publication number: WO 2014/080993

(57) **Abstract**

The present invention contributes to improvement of connectivity of a virtual network established in each of a plurality of sites. In a communication system, a virtual network management apparatus includes: an endpoint management unit configured to manage virtual network endpoints of control target communication nodes; a policy control unit configured to select, when a communication occurs between two sites in each of which a virtual network is configured, virtual network endpoints for realizing the communication from among the virtual network endpoints managed by the endpoint management unit; and a network configuration unit configured to generate and manage a third virtual network that connects the selected endpoints to each other. A control apparatus configured to notify the virtual network management apparatus of occurrence of a communication between the two sites and control a communication node group including the communication nodes having the virtual network endpoints so as to configure the third virtual network on the basis of an instruction from the virtual network management apparatus.

## Description

### [Technical Field]

### (Reference to Related Application)

This application is based upon and claims the benefit of the priority of Japanese Patent Application No. 2012-255886 filed on November 22, 2012, the disclosure of which is incorporated herein in its entirety by reference thereto.

The present invention relates to a communication system, a virtual network management apparatus, a communication node, a communication method, and a program. In particular, it relates to: a communication system including a control apparatus controlling communication nodes; a virtual network management apparatus; a communication node; a communication method; and a program.

### [Background]

PTL 1 discloses a single physical server apparatus that is arranged in a server-side closed network. According to PTL 1, a plurality of user-side closed networks do not share this server apparatus. Instead, each of the user-side closed networks independently uses the server apparatus as a dedicated server for each of the user-side closed networks. In addition, according to PTL 1, when an access server connected to the user-side closed networks via respective IP tunnels receives a connection request packet from a host, the access server identifies from which closed network the request packet has been transmitted, assigns a unique identification code to the identified user-side closed network in the form of a packet tag, and forwards the request packet to the server apparatus. Next, from the identification tag in the received packet, the server apparatus determines the closed network to which the source host belongs.

PTL 2 discloses a technique for associating physical identification information of a physical server with virtual identification information of a virtual server. According to PTL 2, a server apparatus connected to a layer 2 network includes a server virtualization means, a physical identification information storage means for storing physical identification information of the server apparatus, and an OAM (Operation Administration and Maintenance) function means for causing a virtual interface, a virtual switch, or a physical interface to transmit/receive an OAM frame that includes virtual identification information of the virtual server on the basis of an Ethernet OAM protocol. In addition, the OAM function means reads the physical identification information from the physical identification information storage means and stores the read information in the OAM frame that is transmitted to the layer 2 network from the virtual interface.

NPLs 1 and 2 disclose a network architecture called OpenFlow in which physical switches are controlled in a centralized manner. Since OpenFlow enables fine-grained control on a per-flow basis, a physical network configured with OpenFlow switches can be sliced by using VLAN IDs, for example. Namely, a plurality of virtual networks can be provided. In addition, OpenFlow allows a user to use a physical switch as a virtual node on such a virtual network.

Recent years have seen development of various services using cloud computing (hereinafter, referred to as "cloud services") by applying at least one of the techniques disclosed in the above PTLs 1 and 2 and NPLs 1 and 2. Companies and data center operators have responded to the increased use of these cloud services by enhancing server resources.

### [Citation List]

### [Patent Literature]

[PTL1] Japanese Patent Kokai Publication No. JP2003-167805A
[PTL 2]
   Japanese Patent Kokai Publication No. JP2012-80263A

### [Non Patent Literature]

[NPL 1]
   Nick McKeown, and seven others, "OpenFlow: Enabling Innovation in Campus Networks," [online], [searched November 8, 2012], Internet <URL:http://www.openflow.org/documents/openflow-wp-latest.pdf>
[NPL 2]
   "OpenFlow Switch Specification" Version 1.1.0 Implemented (Wire Protocol 0x02), [online], [searched on November 8, 2012], Internet <URL:http://www.openflow.org/documents/openflow-spec-v1.1.0.pdf>

### [Summary]

### [Technical Problem]

The following analysis has been made by the present inventor. However, for example, if a natural disaster occurs and an unpredictable increase of load is caused, the above countermeasures are not sufficient. For example, if a natural disaster occurs and facilities in the disaster area malfunction, available server resources are reduced. In contrast, since emergency communications and simultaneous accesses to the servers in such area are performed, demands for services rapidly increase. As a result, network congestions can easily occur.

To respond to such sudden change of supply-demand balance, a technique of connecting a plurality of sites and sharing a server resource among the connected sites has been considered. In addition, to enable flexible management of a server resource among a plurality of sites, the plurality of sites need to be connected to each other dynamically. In particular, in a cloud service, a dedicated environment called a tenant is established per use mode. Thus, when a plurality of sites are connected to each other, network connectivity per tenant needs to be improved.

An object of the present invention is to provide a communication system, a virtual network management apparatus, a communication node, a communication method, and a program that can contribute to improvement of connectivity of a virtual network established in each of a plurality of sites.

### [Solution to Problem]

According to a first aspect, there is provided a communication system, comprising: a virtual network management apparatus comprising: an endpoint management unit configured to manage virtual network endpoints of control target communication nodes; a policy control unit configured to select, when a communication occurs between two sites in each of which a virtual network is configured, virtual network endpoints for realizing the communication from among the virtual network endpoints managed by the endpoint management unit; and a network configuration unit configured to generate and manage a third virtual network that connects the selected endpoints to each other; a control apparatus configured to notify the virtual network management apparatus of occurrence of a communication between the two sites and control a communication node group including the communication nodes having the virtual network endpoints so as to configure the third virtual network on the basis of an instruction from the virtual network management apparatus; and communication nodes configured to be controlled by the control apparatus in a centralized manner.

According to a second aspect, there are provided the virtual network management apparatus and the communication nodes used in the above communication system.

According to a third aspect, there is provided a communication method, causing a virtual network management apparatus comprising an endpoint management unit managing virtual network endpoints of control target communication nodes to perform steps of: selecting, when a communication occurs between two sites in each of which a virtual network is configured, virtual network endpoints for realizing the communication from among the virtual network endpoints managed by the endpoint management unit; generating a third virtual network that connects the selected endpoints to each other; and controlling a communication node group including the communication nodes having the virtual network endpoints so as to configure the third virtual network. This method is associated with a certain machine, namely, with the virtual network management apparatus including the above endpoint management unit.

According to a fourth aspect, there is provided a program, causing a computer constituting a virtual network management apparatus connected to a control apparatus controlling a communication node group including communication nodes having virtual network endpoints to perform processing for: selecting, when a communication occurs between two sites in each of which a virtual network is configured, virtual network endpoints for realizing the communication from among the virtual network endpoints managed by the endpoint management unit; generating a third virtual network that connects the selected endpoints to each other; and instructing the control apparatus to control the communication node group so as to configure the third virtual network. This program can be recorded in a computer-readable (non-transient) storage medium. Namely, the present invention can be embodied as a computer program product.

### [Advantageous Effects of Invention]

The present invention can contribute to improvement of connectivity of a virtual network established in each of a plurality of sites.

### [Brief Description of Drawings]

[Fig. 1]

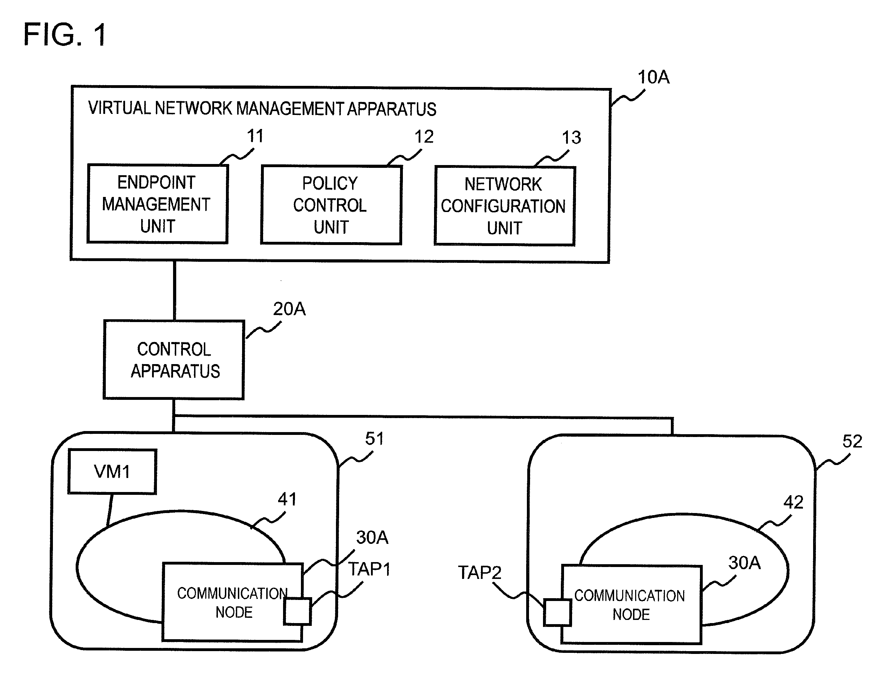

   Fig. 1 illustrates a configuration according to an exemplary embodiment of the present invention.
[Fig. 2]

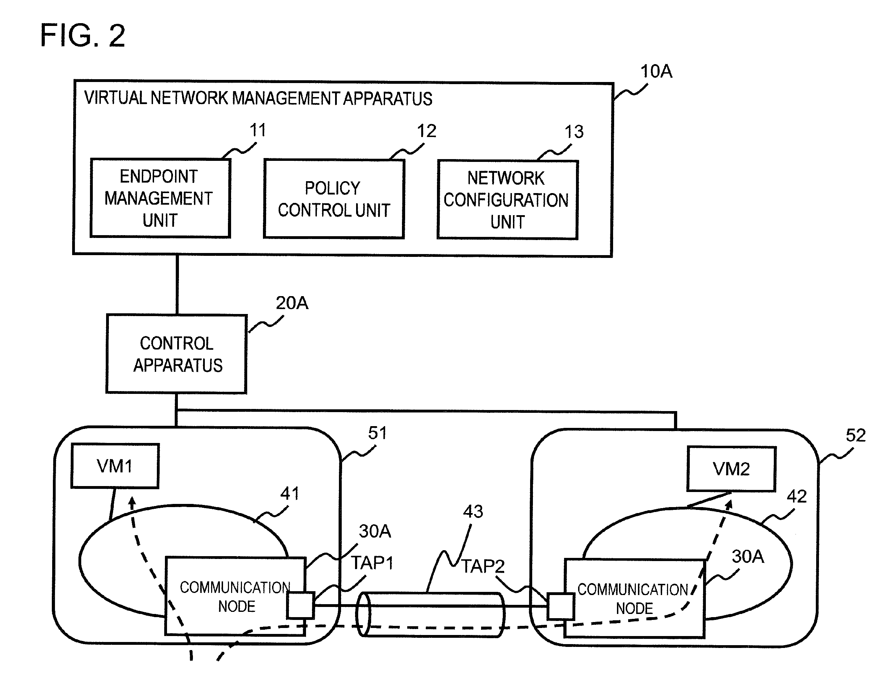

   Fig. 2 illustrates an operation according to the exemplary embodiment of the present invention.
[Fig. 3]

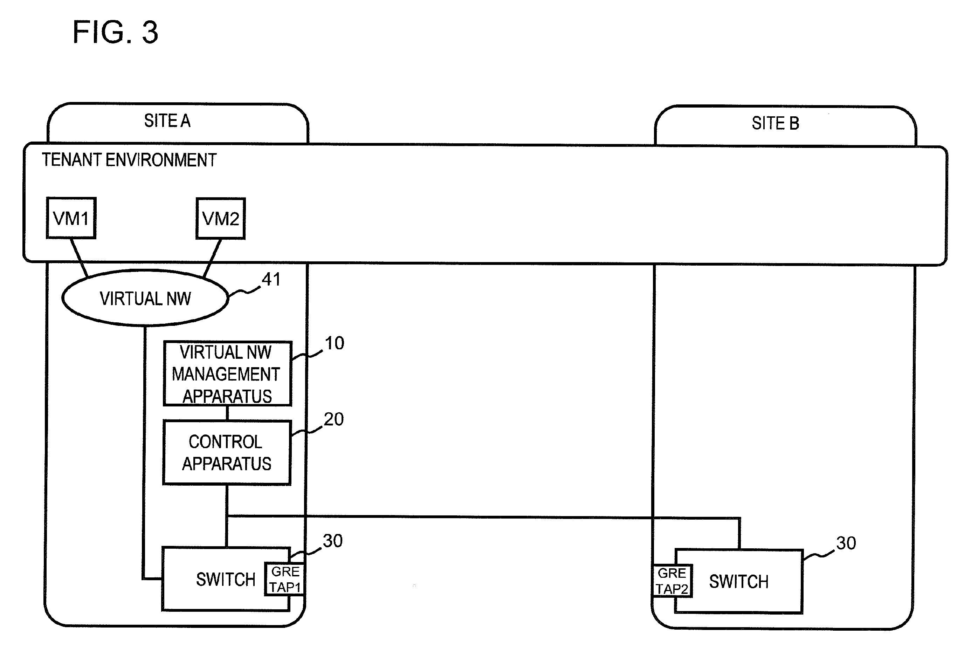

   Fig. 3 illustrates a configuration of a communication system according to a first exemplary embodiment of the present invention.
[Fig. 4]

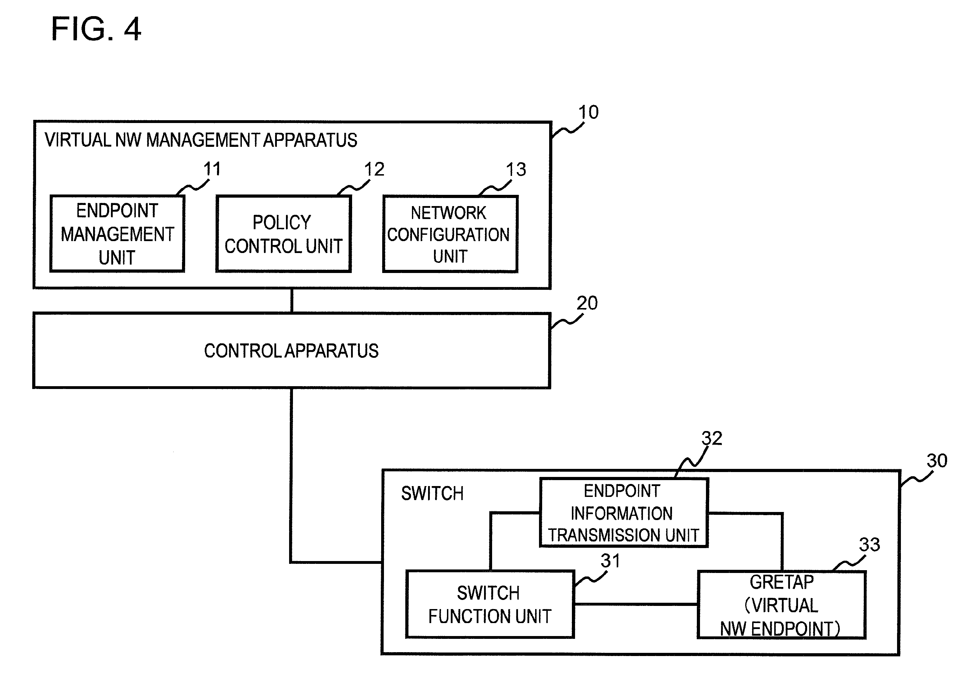

   Fig. 4 is a block diagram illustrating detailed configurations of components arranged in a site A in Fig. 3.
[Fig. 5]

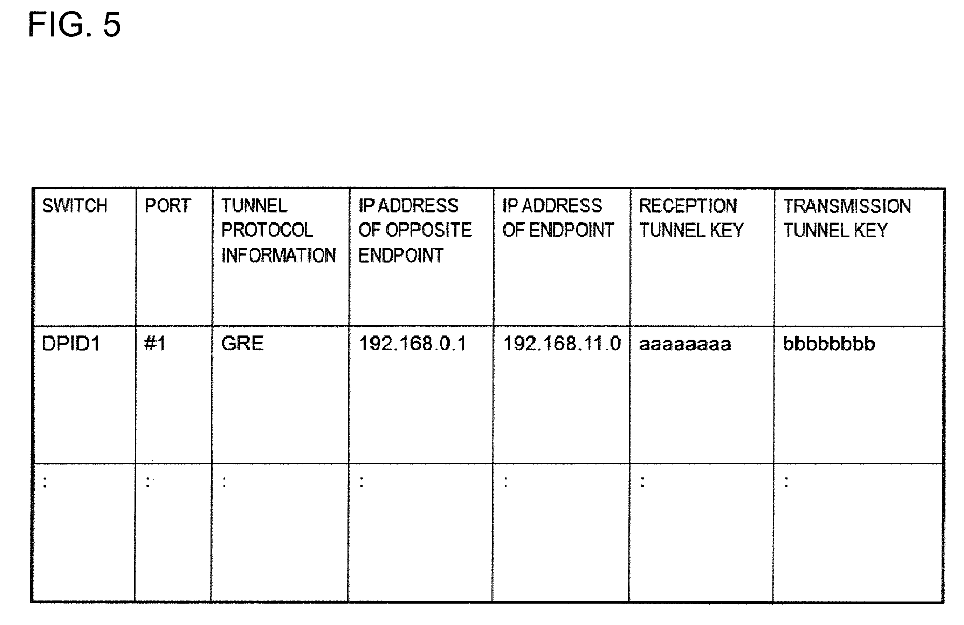

   Fig. 5 illustrates exemplary information stored in an endpoint management unit in a virtual network management apparatus according to the first exemplary embodiment of the present invention.
[Fig. 6]

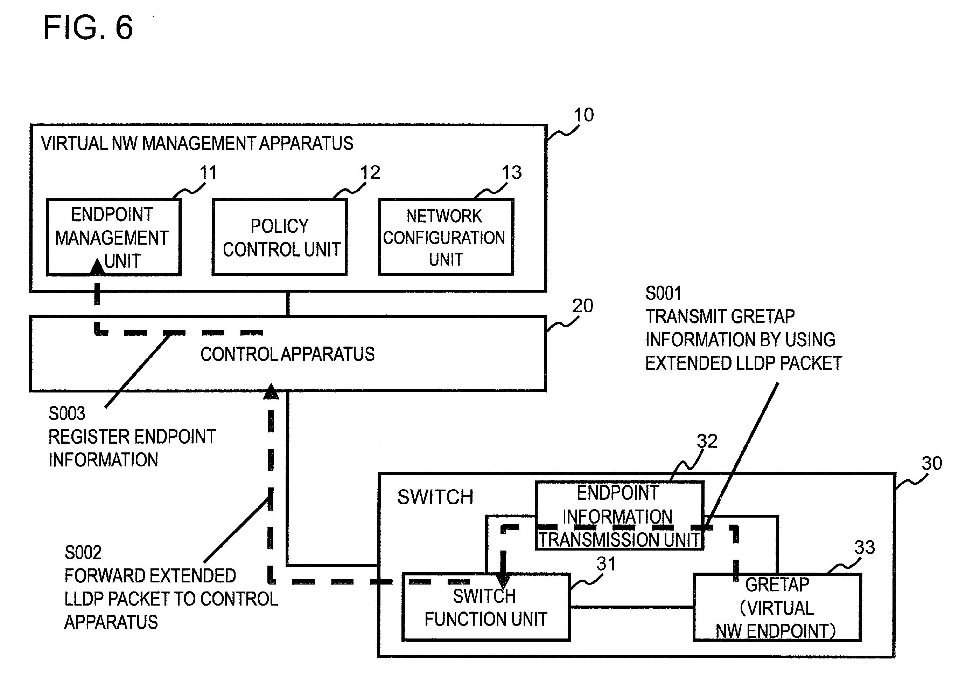

   Fig. 6 illustrates an operation (transmission of endpoint information) of the communication system according to the first exemplary embodiment of the present invention.
[Fig. 7]

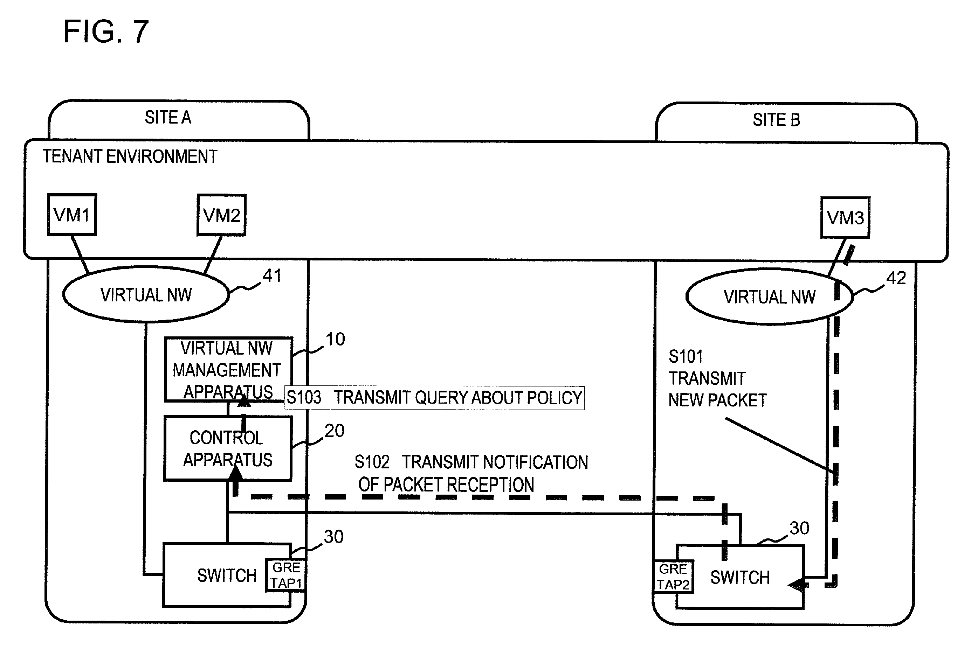

   Fig. 7 illustrates an operation (a dynamic network configuration) of the communication system according to the first exemplary embodiment of the present invention.
[Fig. 8]

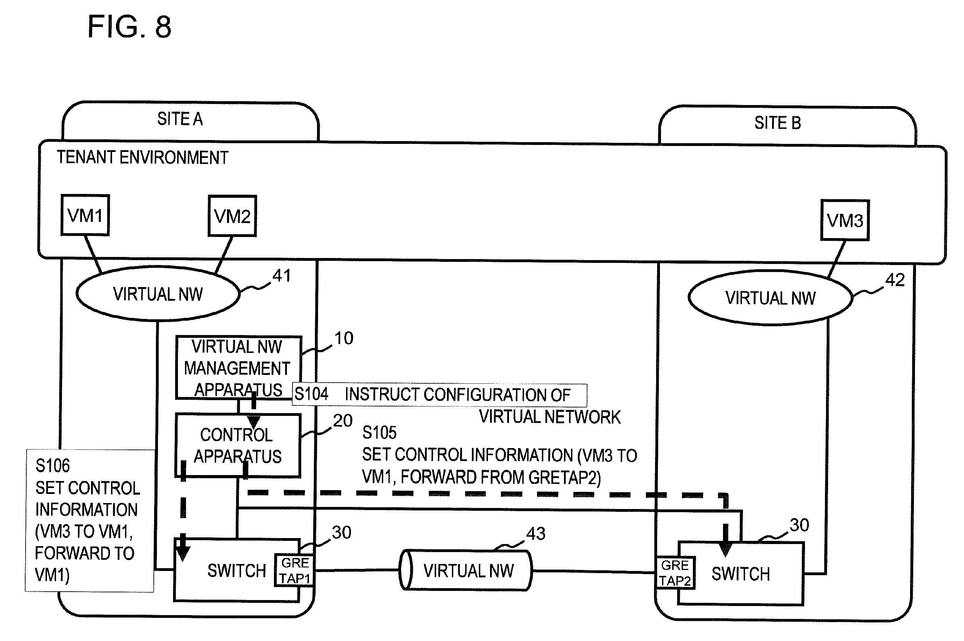

   Fig. 8 is a diagram that follows Fig. 7.
[Fig. 9]

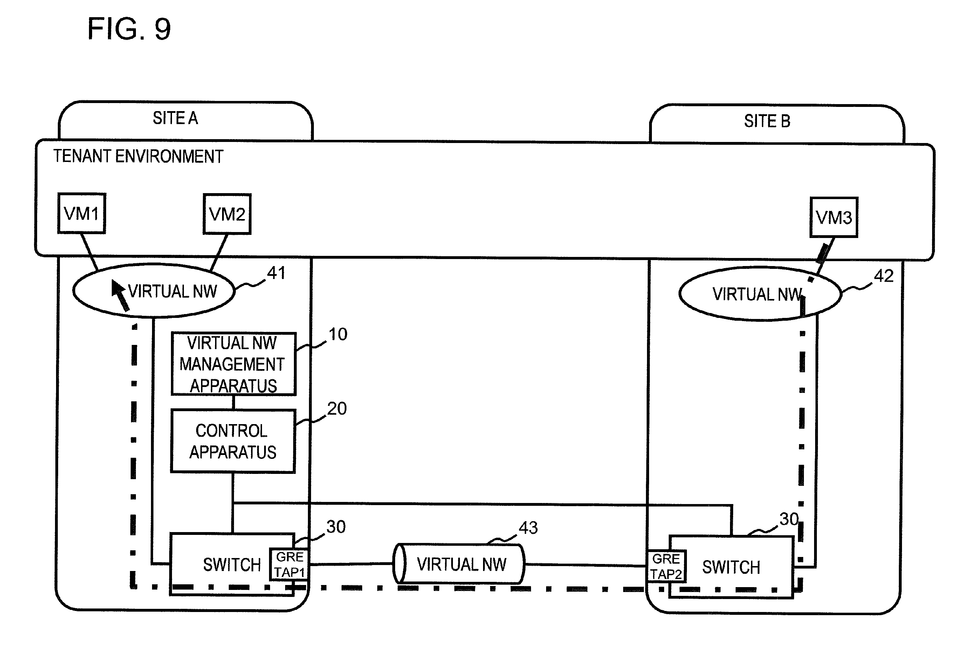

   Fig. 9 is a diagram that follows Fig. 8.
[Fig. 10]

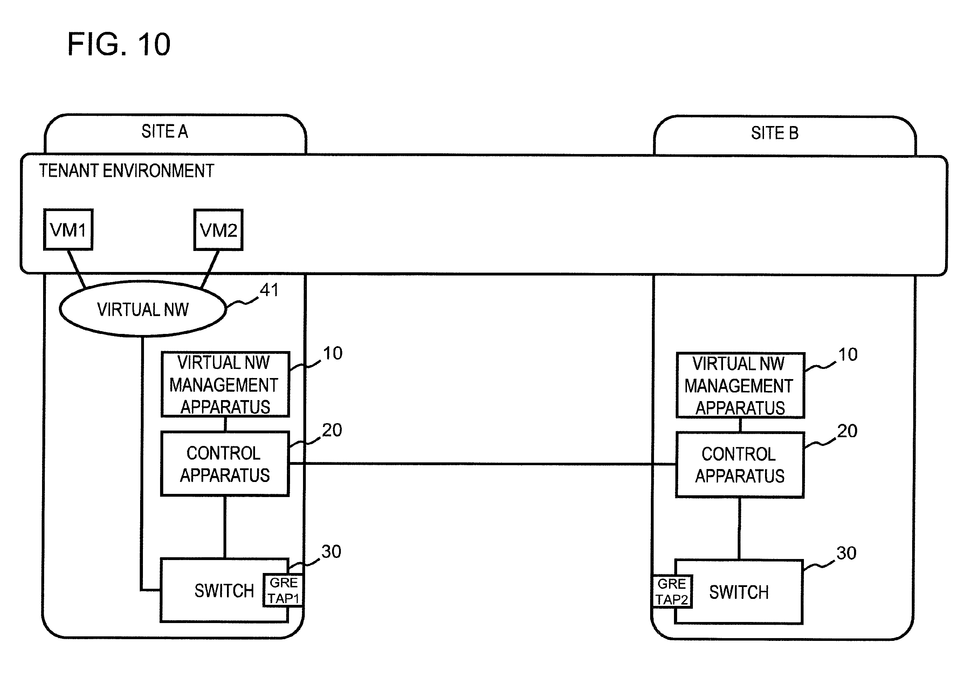

   Fig. 10 illustrates an operation of a communication system according to a second exemplary embodiment of the present invention.

### [Description of Embodiments]

First, an outline of an exemplary embodiment according to the present invention will be described with reference to drawings. In the following outline, various components are denoted by reference characters for the sake of convenience. Namely, the following reference characters are merely used as examples to facilitate understanding of the present invention, not to limit the present invention to the illustrated modes.

As illustrated in Fig. 1, an exemplary embodiment of the present invention can be realized by a configuration that includes a virtual network management apparatus 10A, a control apparatus 20A, and sites 51 and 52 that include virtual networks 41 and 42, respectively.

The virtual network management apparatus 10A includes an endpoint management unit 11 that manages virtual network endpoints TAP1 and TAP2 of control target communication nodes 30A, a policy control unit 12 that selects, when a communication occurs between the sites 51 and 52, virtual network endpoints for realizing the communication from among the virtual network endpoints managed by the endpoint management unit 11, and a network configuration unit 13 that generates and manages a third virtual network that connects the selected endpoints to each other. Next, the following description will be made assuming that a new virtual machine (VM2) has been established in the site 52 to respond to a rapid increase in service demand in the site 51, as illustrated in Fig. 2.

For example, if the control apparatus 20A detects that occurrence of a communication between the sites 51 and 52 by receiving a service start notification from the VM2, the control apparatus 20A notifies the virtual network management apparatus 10A of the occurrence of the communication between the sites 51 and 52. In addition, the control apparatus 20A controls a communication node group that includes communication nodes having the virtual network endpoints so as to configure a third virtual network 43 on the basis of an instruction from the virtual network management apparatus 10A, as illustrated in Fig. 2. For example, if the endpoints TAP1 and TAP2 in Fig. 1 are selected as the virtual network endpoints for realizing the communication, the control apparatus 20A controls a communication node group that includes the communication nodes 30A having the virtual network endpoints TAP1 and TAP2, respectively, as illustrated in Fig. 2. In this way, packets addressed to a VM1 are processed in the VM2. As a result, load balancing can be achieved.

### [First exemplary embodiment]

Next, a first exemplary embodiment of the present invention will be described in detail with reference to the drawings. Fig. 3 illustrates a configuration of a communication system according to the first exemplary embodiment of the present invention. In Fig. 3, sites A and B each of which includes a switch 30 are illustrated. In addition to the switch 30, the site A includes a virtual network management apparatus 10 (hereinafter, referred to as a "virtual NW management apparatus") and a control apparatus 20. In addition, a virtual network 41 is configured in the site A. Likewise, a virtual network 42 is configured in the site B. In Fig. 3, the virtual NW management apparatus 10 and the control apparatus 20 are arranged in the site A. However, the virtual NW management apparatus 10 and the control apparatus 20 may be arranged in another site such as in the site B, as long as the virtual NW management apparatus 10 and the control apparatus 20 can control the switches 30.

In addition, in the sites A and B, a tenant environment that can exclusively be used by certain users can be established. For example, such a user can establish a virtual network by using virtual machines, virtual switches, etc. in the site B, in the same way as in the site A.

Fig. 4 is a block diagram illustrating detailed configurations of components arranged in the site A in Fig. 3. As illustrated in Fig. 4, the switch 30 includes a switch function unit 31, an endpoint information transmission unit 32, and a GRETAP (virtual network endpoint) 33.

The switch function unit 31 performs packet processing equivalent to that performed by an OpenFlow switch in NPLs 1 and 2. More specifically, the switch function unit 31 stores control information (flow entries) set by the control apparatus 20. When receiving a packet, the switch function unit 31 performs a processing content(s) defined in control information (a flow entry) having a matching condition(s) that matches the received packet.

The endpoint information transmission unit 32 transmits information (hereinafter, referred to as "endpoint information") about a virtual network endpoint of the switch 30 to the control apparatus 20 via the switch function unit 31. For example, as an extension item of LLDP defined in IEEE 801AB, the endpoint information transmission unit 32 may transmit an LLDP (Link Layer Discovery Protocol) packet (an extended LLDP packet) when transmitting endpoint information illustrated in Fig. 5. As a mechanism for causing the switch function unit 31 to forward the above extended LLDP packet to the control apparatus 20, a Packet-In message may be used. The Packet-In message is used when the OpenFlow switch in NPL 2 forwards a packet that does not match any existing flow entries to the OpenFlow controller.

The GRETAP (virtual network endpoint) 33 is an endpoint of a GRE tunnel established by the GRE protocol. While GRE is used in the present exemplary embodiment, the protocol is not limited to GRE. Namely, any other suitable tunnel protocol may be used.

When receiving the above LLDP packet from the switch 30 or a packet transmitted from a virtual machine (VM) in the site, the control apparatus 20 forwards the received packet to the virtual NW management apparatus 10. The control apparatus 20 sets control information (a flow entry) in the switch function unit 31 in the switch 30 on the basis of an instruction from the virtual NW management apparatus 10. As the control apparatus 20, the OpenFlow controller disclosed in NPLs 1 and 2 may be used.

The virtual NW management apparatus 10 includes an endpoint management unit 11, a policy control unit 12, and a network configuration unit 13.

The endpoint management unit 11 receives endpoint information from the switch 30 via the control apparatus 20 and manages the received endpoint information. Fig. 5 illustrates an exemplary table used by the endpoint management unit 11 for managing the endpoint information. For example, Fig. 5 illustrates an entry in which "Switch" (an identifier of the switch), "port," "Tunnel protocol information," "IP address of opposite endpoint," "IP address of endpoint," "Reception tunnel key," and "Transmission tunnel key" are associated with each other. "Switch" (the identifier of the switch) and "Port" represent an identifier of this switch (DataPath IDentifier) and a port number of this switch, respectively. "Tunnel protocol information" is a field in which a tunnel protocol type such as GRE or IPsec is stored. "IP address of opposite endpoint" is a field in which an IP address assigned to an opposite apparatus connected to this port is stored. "IP address of endpoint" is a field in which an IP address assigned to this endpoint is stored. "Reception tunnel key" and "Transmission tunnel key" are fields in which tunnel keys used for reception and transmission between the connected destination and the endpoint are stored, respectively.

When notified of occurrence of a communication between sites by the control apparatus 20, the policy control unit 12 determines whether to configure a virtual network between the sites on the basis of a predetermined virtual network configuration policy. For example, whether the source and the destination belong to the same tenant may be determined, as one simple example of the virtual network configuration policy. In addition, for example, presence of an access right between the source and the destination may be added to the determination condition. If, as a result of the determination, the policy control unit 12 permits the communication, the policy control unit 12 selects virtual network endpoints for realizing the communication from among the virtual network endpoints managed by the endpoint management unit 11 and notifies the network configuration unit 13 of the selected endpoints. For example, if a communication occurs between the sites A and B in Fig. 3 and the communication is permitted, the policy control unit 12 selects GRETAP1 and GRETAP2 of the respective switches 30 from the endpoint management unit 11.

When notified of the set of endpoints that configures a virtual network by the policy control unit 12, the network configuration unit 13 requests the control apparatus 20 to transmit control messages to be set in a switch group including the switches 30 so as to connect these endpoints to each other. The network configuration unit 13 may create the control messages or the network configuration unit 13 may instruct the control apparatus 20 to create the control messages on the basis of virtual network configuration information stored in the network configuration unit 13.

Each unit (processing means) in the virtual NW management apparatus 10 and the switches 30 illustrated in Fig. 3 may be realized by a computer program that causes a computer constituting each of these components to use its hardware and to perform each of the above processing.

Next, the present exemplary embodiment will be described in detail with reference to the drawings. First, an endpoint information acquisition operation of the virtual NW management apparatus 10 performed as a preparation for a dynamic network configuration described below will be described. Fig. 6 illustrates an operation of transmitting endpoint information from the switch 30 to the virtual NW management apparatus 10.

First, the endpoint information transmission unit 32 in the switch 30 transmits information about its own port to the switch function unit 31 by using LLDP (step S001 in Fig. 6). The information transmitted from the endpoint information transmission unit 32 to the switch function unit 31 includes information about the GRETAP 33, which is used as an endpoint of the virtual network.

When receiving the extended LDP packet transmitted by using LLDP, the switch function unit 31 forwards the extended LLDP packet to the control apparatus 20 (step S002 in Fig. 6). The forwarding of this extended LLDP packet is realized by using a Packet-In message in NPL 2 or control information (a flow entry) that defines an operation performed when an extended LLDP packet is received.

The control apparatus 20 transmits the extended LLDP packet to the virtual NW management apparatus 10 to register the received extended LLDP packet in the endpoint management unit 11 (step S003 in Fig. 6). In this way, the endpoint management unit 11 in the virtual NW management apparatus 10 acquires the information about the virtual network endpoint of the switch included in the communication system.

Next, a flow for configuring a dynamic network between the sites performed by the virtual NW management apparatus 10 will be described. The following description will be made assuming that congestion has occurred in server resources (VM1 and VM2) in a cloud system in the site A in Fig. 3 and a new server resource (VM3) has been established in another site (for example, in the site B) to reduce the congestion in the site A.

In Fig. 3, the VM1 and the VM2 are operated in the site A and are connected to the virtual network 41. However, since congestion has occurred in the server resources (VM1 and VM2) in the cloud system in the site A, a server resource (VM3) has been established and connected to a virtual network 42 in the site B, as illustrated in Fig. 7.

If a packet is transmitted from the server resource VM3 to the VM1 or the VM2 in this state (step S101 in Fig. 7), the switch 30 in the site B notifies the control apparatus 20 of the reception of the new packet by using a Packet-In message in NPL2 or control information (a flow entry) that defines an operation performed when the switch 30 receives a packet addressed to another site (step S102 in Fig. 7).

When notified of the reception of the new packet, the control apparatus 20 queries the virtual NW management apparatus 10 about whether the control apparatus 20 needs to forward the packet from the VM3 in the site B to the destination (the VM1, for example) in the site A (step S103; TRANSMIT QUERY ABOUT POLICY).

When receiving the query, the virtual NW management apparatus 10 causes the policy control unit 12 to determine whether a virtual network needs to be configured between the sites on the basis of a predetermined virtual network configuration policy. In this exemplary embodiment, since the VM1 and the VM2 belong to the same tenant environment as that of the VM3, the policy control unit 12 permits the communication. In addition, the network configuration unit 13 in the virtual NW management apparatus 10 instructs the control apparatus 20 to generate a communication path via GRETAP1 and GRETAP2 in the respective switches 30 in Fig. 3 (step S104 in Fig. 8; INSTRUCT CONFIGURATION OF VIRTUAL NETWORK).

When receiving the instruction, the control apparatus 20 connects GRETAP1 in the site A and GRETAP2 so that the virtual network 41 in the site A and the virtual network 42 in the site B are connected to each other via a virtual network 43. In Fig. 8, the control apparatus 20 sets control information (a flow entry) that instructs the switch 30 in the site B to forward packets addressed to the VM1 from the VM3 from GRETAP2 in the switch 30 in the site B (step S105 in Fig. 8). Likewise, the control apparatus 20 sets control information (a flow entry) that instructs the switch 30 in the site A to forward packets addressed to the VM3 from the VM1 from GRETAP1 in the switch 30 in the site A (step S106 in Fig. 8). To set the control information (the flow entry), a flow entry setting control message (FlowMod) used in the OpenFlow protocol in NPL 1 may be used.

As a result, as illustrated in Fig. 9, the VM1 and the VM3 that operate in the respective sites can communicate with each other. Thus, the load on the VM2 and a physical machine (a virtual server) on which the VM2 operates can be reduced.

While the exemplary embodiment of the present invention has thus been described, the present invention is not limited thereto. Further variations, substitutions, or adjustments can be made without departing from the basic technical concept of the present invention. For example, the configurations of the networks and the components illustrated in the drawings are merely used as examples to facilitate understanding of the present invention, not to limit the present invention to the configurations illustrated in these drawings.

In addition, for example, the above exemplary embodiment has been described on the basis of the example in which the VM3 is newly established in the site B. However, even in a case where a server resource (for example, the VM2) that has been operated in the site A is moved (migrated) to the site B, communication between the VM1 and the VM2 can be realized by an operation similar to the above operation.

In addition, for example, the above exemplary embodiment has been described on the basis of the example in which the site A includes the virtual NW management apparatus 10 and the control apparatus 20. However, the locations of the virtual NW management apparatus 10 and the control apparatus 20 are not limited to the above locations, as long as the virtual NW management apparatus 10 and the control apparatus 20 can communicate with the switches 30. In addition, for example, as illustrated in Fig. 10, the virtual NW management apparatus 10 and the control apparatus 20 may be arranged in each of the sites A and B and these apparatuses may be operated in coordination with each other.

In addition, for example, the above exemplary embodiment has been described on the basis of the example in which the policy control unit 12 determines whether to permit exchange of packets between the VM3 and the VM1. However, for example, if the VM3 and the VM1 belong to their respective tenant environments or if the VM1 (VM3) does not have a right to access the VM3 (VM1), the policy control unit 12 may transmit a negative acknowledgement to the control apparatus 20, instead of performing the selection of virtual network endpoints.

Finally, suitable modes of the present invention will be summarized.

### [Mode 1]

### (See the communication system according to the above first aspect)

### [Mode 2]

The communication system according to mode 1;
wherein each of the communication nodes comprises an endpoint information transmission unit configured to generate information about a corresponding virtual network endpoint and transmit the generated information to the control apparatus; and
wherein the control apparatus transmits the endpoint information received from the communication nodes to the endpoint management unit.

### [Mode 3]

The communication system according to mode 2;
wherein the endpoint information transmission unit transmits the endpoint information by using an extended item field of LLDP (Link Layer Discovery Protocol).

### [Mode 4]

The communication system according to any one of modes 1 to 3;
wherein, if the communication between the two sites is a communication performed in the same tenant environment, the policy control unit performs the selection of virtual network endpoints.

### [Mode 5]

The communication system according to any one of modes 1 to 4;
wherein, if the communication between the two sites does not satisfy a predetermined condition(s), the policy control unit does not perform the selection of virtual network endpoints.

### [Mode 6]

### (See the virtual network management apparatus and the communication node according to the above second aspect)

### [Mode 7]

### (See the communication method according to the above third aspect)

### [Mode 8]

### (See the program according to the above fourth aspect)

Modes 6 to 8 can be expanded in the same way as mode 1 is expanded to modes 2 to 5.

The disclosure of each of the above PTLs and NPLs is incorporated herein by reference thereto. Modifications and adjustments of the exemplary embodiments and the examples are possible within the scope of the overall disclosure (including the claims) of the present invention and based on the basic technical concept of the present invention. In addition, various combinations and selections of various disclosed elements (including the elements in each of the claims, exemplary embodiments, examples, drawings, etc.) are possible within the scope of the claims of the present invention. Namely, the present invention of course includes various variations and modifications that could be made by those skilled in the art according to the overall disclosure including the claims and the technical concept. In particular, the present description discloses numerical value ranges. However, even if the description does not particularly disclose arbitrary numerical values or small ranges included in the ranges, these values and ranges should be deemed to have been specifically disclosed.

### [Reference Signs List]

- 10, 10A: virtual network management apparatus
- 11: endpoint management unit
- 12: policy control unit
- 13: network configuration unit
- 20, 20A: control apparatus
- 30: switch
- 30A: communication node
- 31: switch function unit
- 32: endpoint information transmission unit
- 33, TAP1, TAP2: GRETAP (virtual network endpoint)
- 41, 42, 43: virtual network
- 51, 52: site

## Claims

1. A communication system, comprising:
a virtual network management apparatus comprising:
an endpoint management unit configured to manage virtual network endpoints of control target communication nodes;
a policy control unit configured to select, when a communication occurs between two sites in each of which a virtual network is configured, virtual network endpoints for realizing the communication from among the virtual network endpoints managed by the endpoint management unit; and
a network configuration unit configured to generate and manage a third virtual network that connects the selected endpoints to each other;
a control apparatus configured to notify the virtual network management apparatus of occurrence of a communication between the two sites and control a communication node group including the communication nodes having the virtual network endpoints so as to configure the third virtual network on the basis of an instruction from the virtual network management apparatus; and
communication nodes configured to be controlled by the control apparatus in a centralized manner.

2. The communication system according to claim 1;
wherein each of the communication nodes comprises an endpoint information transmission unit configured to generate information about a corresponding virtual network endpoint and transmit the generated information to the control apparatus; and
wherein the control apparatus transmits the endpoint information received from the communication nodes to the endpoint management unit.

3. The communication system according to claim 2;
wherein the endpoint information transmission unit transmits the endpoint information by using an extended item field of LLDP (Link Layer Discovery Protocol).

4. The communication system according to any one of claims 1 to 3;
wherein, if the communication between the two sites is a communication performed in the same tenant environment, the policy control unit performs the selection of virtual network endpoints.

5. The communication system according to any one of claims 1 to 4;
wherein, if the communication between the two sites does not satisfy a predetermined condition(s), the policy control unit does not perform the selection of virtual network endpoints.

6. A virtual network management apparatus, connected to a control apparatus controlling a communication node group including communication nodes having virtual network endpoints, the virtual network management apparatus comprising:
an endpoint management unit configured to manage virtual network endpoints of control target communication nodes;
a policy control unit configured to select, when a communication occurs between two sites in each of which a virtual network is configured, virtual network endpoints for realizing the communication from among the virtual network endpoints managed by the endpoint management unit; and
a network configuration unit configured to generate and manage a third virtual network that connects the selected endpoints to each other.

7. A communication node controlled by a control apparatus, the communication node comprising:
a virtual network endpoint;
wherein the communication node generates information about the virtual network endpoint and transmits the information about the virtual network endpoint to the control apparatus.

8. A communication method, causing a virtual network management apparatus comprising an endpoint management unit managing virtual network endpoints of control target communication nodes to perform steps of:
selecting, when a communication occurs between two sites in each of which a virtual network is configured, virtual network endpoints for realizing the communication from among the virtual network endpoints managed by the endpoint management unit;
generating a third virtual network that connects the selected endpoints to each other; and
controlling a communication node group including the communication nodes having the virtual network endpoints so as to configure the third virtual network.

9. A program, causing a computer constituting a virtual network management apparatus connected to a control apparatus controlling a communication node group including communication nodes having virtual network endpoints to perform processing for:
selecting, when a communication occurs between two sites in each of which a virtual network is configured, virtual network endpoints for realizing the communication from among the virtual network endpoints managed by the endpoint management unit;
generating a third virtual network that connects the selected endpoints to each other; and
instructing the control apparatus to control the communication node group so as to configure the third virtual network.
